# EUROPÄISCHE PATENTSCHRIFT

(11) **EP 1 202 892 B1**
(45) Veröffentlichungstag und Bekanntmachung des Hinweises auf die Patenterteilung: **15.06.2005**
(21) Anmeldenummer: 00944038.9
(22) Anmeldetag: 14.07.2000
(51) Int. Cl.: B60T 17/08, B60T 17/18, B60T 8/88, B60T 13/74, F16D 65/16

(54) **VORRICHTUNG UND VERFAHREN ZUR ÜBERWACHUNG ELEKTROMECHANISCHER ZUSPANNVORRICHTUNG FÜR FAHRZEUGBREMSEN**
DEVICE AND METHOD FOR MONITORING A BRAKE-APPLYING ELECTROMECHANICAL DEVICE FOR VEHICLE BRAKES
DISPOSITIF ET PROCEDE POUR SURVEILLER UN DISPOSITIF ELECTROMECANIQUE DE SERRAGE DE FREIN DESTINE A DES FREINS DE VEHICULES

(30) Priorität: 20.07.1999 DE 19933962
(43) Veröffentlichungstag der Anmeldung: 08.05.2002
(73) Patentinhaber: KNORR-BREMSE SYSTEME FÜR NUTZFAHRZEUGE GMBH, 80809 München (DE)
(72) Erfinder: LAXHUBER, Thomas, D-84323 Massing (DE); BAUMGARTNER, Hans, D-85368 Moosburg (DE); PAHLE, Wolfgang, D-74080 Heilbronn (DE)
(86) Internationale Anmeldenummer: PCT/EP2000/006728
(87) Internationale Veröffentlichungsnummer: WO 2001/005638

(56) Entgegenhaltungen:
- EP-A- 0 531 643
- WO-A-99/02882
- DE-A- 19 548 517
- DE-A- 19 814 657
- DE-A- 19 861 109
- US-A- 4 721 344

## Beschreibung

Die Erfindung betrifft eine Vorrichtung und ein Verfahren zur Überwachung elektromechanischer Zuspannvorrichtungen für Fahrzeugbremsen nach den Oberbegriffen der Ansprüche 1 und 11.

Federspeicher werden hauptsächlich zur Betätigung von Feststellbremsen im Nutzfahrzeugbereich eingesetzt, bei denen die benötigte Handkraft zum Betätigen einer Seilzugbremse vom Fahrer nicht mehr aufgebracht werden kann. Bei leichteren Fahrzeugen wird eine Feststellbremswirkung hauptsächlich durch einen reinen Seilzugmechanismus erreicht. Der Fahrer betätigt einen Hebel, an dessen einem Ende ein Seilzug befestigt ist, der an üblicherweise zwei Rädern des Fahrzeugs eine Bremskraft ausübt.

Federspeicherzylinder werden i.allg. so ausgelegt, daß beim Entlüften des.Zylinders eine Zug- oder Druckwirkung entsteht. Die Betätigungskraft für die Radbremse wird durch eine starke Druckfeder aufgebracht, die sich am Gehäuse des Zylinders abstützt und die Zugkraft über einen Federteller und einen Kugelhalter auf die Kolbenstange überträgt. In seiner Fahrtstellung wird der Zylinder über ein Handbremsventil belüftet. Zum Bremsen wird über das Handbremsventil der Druck im belüfteten Raum gesenkt. Die Druckfeder zieht entsprechend der Druckabsenkung die Kolbenstange in den Zylinder, wodurch die Radbremse betätigt wird. Der Federraum ist über den Faltenbalg entlüftet.

Neben der pneumatischen Betätigung des Federspeicherzylinders ist insbesondere bei Schienenfahrzeugen auch der Einsatz eines elektromotorischen Antriebes zur Spannung der Feder des Federspeicherzylinders diskutiert worden. Eine derartige Zuspannvorrichtung ist beispielsweise aus der EP 0 129 969 bekannt. Diese Schrift zeigt eine Zuspannvorrichtung für Schienenfahrzeugbremsen, bei welcher die Antriebswelle eines Elektromotors eine Gewindespindel eines Gewindegetriebes antreibt. Die drehbare Gewindespindel ist axial fixiert und trägt eine Kugelumlaufmutter, welche in einem Federteller sitzt, der sich in ein Schubzugrohr fortsetzt, welches mit einem Bremsgestänge zur Betätigung der Bremsbacken einer Scheibenbremse für Schienenfahrzeuge verbunden ist. Das Schubzugrohr wird beim Zuspannen der Bremse von einer Speicherfeder aus dem Gehäuse nach außen gedrückt. Bei Strombeaufschlagung des Elektromotors spannt dieser über den Gewindetrieb die Speicherfeder, welche bei ihrem Zusammenziehen das Schubzugrohr in das Gehäuse zurückzieht und damit die Bremse löst.

Der Elektromotor bzw. die Abtriebsachse des Elektromotors ist im wesentlichen parallel zur Gewindespindel des Gewindetriebes angeordnet, wobei auf der Abtriebswelle des.Elektromotors ein Ritzel sitzt, welches ein weiteres auf der Gewindespindel angebrachtes Ritzel antreibt.

Ein gattungsgemäßes Verfahren und eine gattungsgemäße Vorrichtung sind aus der DE 197 41 869 A1 bekannt. Diese Schrift zeigt eine Vorrichtung zur Überwachung elektromechanischer Zuspannvorrichtungen für Fahrzeugbremsen, bei welcher die Zuspannvorrichtung u.a. einen Antrieb aufweist, der einen Elektromotor mit einer Stromzuführung und einen Federspeicher mit einer von dem Antrieb spannbaren Feder zur Betätigung eines Stößels zum Zuspannen und Lösen der Fahrzeugbremse umfaßt. Durch die elektrische Betätigung des Elektromotors wird eine Diagnosemöglichkeit gewährleistet.

Die Erfindung zielt darauf ab, mit einfachen Mitteln eine (insbesondere elektronisch arbeitende) Überwachungseinrichtung sowie ein Überwachungsverfahren zu schaffen, mit denen Funktionsstörungen bereits in einem Frühstadium erkannt werden können, so daß eine Service- resp. Reparaturmaßnahme eingeleitet werden kann, bevor eine erkennbare Funktionsbeeinträchtigung der Zuspannvorrichtung oder gar ein Versagen des Federspeichers eintritt. Insbesondere sollen die Überwachungseinrichtung sowie das Überwachungsverfahren auch zur Überwachung von Zuspannvorrichtungen mit elektromechanischen Federspeichern geeignet sein.

Die Erfindung erreicht dieses Ziel in Hinsicht auf die Vorrichtung durch den Gegenstand des Anspruches 1 und in Hinsicht auf das Verfahren durch den Gegenstand des Anspruches 11.

Die Überwachungsvorrichtung weist eine als Sensor ausgebildetV Ermittlungseinrichtung zur Ermittlung des Strom- und/oder Spannungsverlaufes in der Stromzuführung auf, deren Ausgang an eine Auswertungseinrichtung angeschlossen ist, welche dazu ausgelegt ist, den ermittelten Strom- und/oder Spannungsverlauf mit vorgespeicherten Sollwerten und/oder einer vorgespeicherten Sollwertcharakteristik zu vergleichen (und anhand des Vergleichs ggf. ein Fehlersignal auszugeben).

Mit der Erfindung kann die Funktionssicherheit und Zuverlässigkeit der elektromechanischen Federspeicher gegenüber Federspeichern - auch mit pneumatischen Lösekolben - die über derartige Überwachungseinrichtungen nicht verfügen, bei nur geringen (Zusatz-)Kosten deutlich erhöht werden.

Die Erfindung setzt bei der Erkenntnis an, daß der wenigstens eine zum Lösen des elektromechanischen Federspeichers eingesetzte Antrieb (Elektromotor) beim Einbremsen durch die Kraft der Feder - vorzugsweise über einen Spindeltrieb und Umschlingungs- und/oder Rädergetriebe - mit angetrieben wird. In diesem Zustand wirkt der Elektromotor als Generator, so daß er Strom erzeugt und so daß an ihm eine Spannung anliegt, deren Beträge im wesentlichen von der erreichten Antriebsdrehzahl und gegebenenfalls von angeschlossenen elektrischen Verbrauchern abhängen. Im Falle der fehlerlosen Funktion des Federspeichers wird somit bei einem Einbremsen ein charakteristischer Strom resp. eine charakteristische Spannung am Motor generiert. Diese charakteristischen Werte (oder sogar Funktionen) können in einem Speicher hinterlegt und von der Auswertungseinrichtung (die z.B. ein Teil - insbesondere eine Software - eines EBS-Steuergerätes sein kann) abgerufen werden.

Nahezu jede Störung in der Funktion des elektromechanischen Übertragungssystems wirkt sich in einer veränderten Motordrehzahl und damit in der abgegebenen Generatorspannung (bzw. im Generatorstrom) aus. Dies beginnt bei trivialen Schäden wie gebrochenen oder kalten Lötstellen, defekten Leitungskabeln oder Steckverbindungen. Daneben lassen sich auch Störungen wie Schwergängigkeit oder gar Fressen der Kugelumlaufspindel, des Übertragungsgetriebes, des Federspeicherkolbens, oder eine schleifende oder vollständig blockierende Magnetbremse ermitteln. Tritt im Elektromotor selbst eine Funktionsstörung auf, wie z. B. eine durchgebrannte Wicklung, Bürstenverschleiß oder -bruch, so wirkt sich auch dies direkt auf den abgegebenen Strom bzw. die anliegende Spannung aus. Auch der Bruch eines kraft- oder momentenübertragenden Bauteils ist sofort erkennbar: Vorzugsweise ist die Auswertungseinrichtung daher dazu ausgelegt, den ermittelten Strom- und/oder Spannungsverlauf mit vorgespeicherten Sollwerten und/oder einer vorgespeicherten Sollwertcharakteristik während eines Generatorbetriebes des Elektromotors zu vergleichen.

In Hinsicht auf das Verfahren erreicht die Erfindung ihr Ziel dadurch, daß mit der Ermittlungseinrichtung der Strom- und Spannungsverlauf in der Stromzuführung zumindest im Generatorbetrieb und/oder im Motorbetrieb des Elektromotors überwacht und mit Hilfe der Auswertungseinrichtung mit vorgespeicherten Sollwerten oder mit einer vorgespeicherten Sollwertcharakteristik verglichen wird, wobei bei einem Auftreten von Abweichungen von den vorgespeicherten Sollwerten oder der vorgespeicherten Sollwertcharakteristik ein Fehlersignal erzeugt wird.

Zusätzlich zur Spannungs- resp. Stromüberwachung am Elektromotor ist es zweckmäßig, weitere Sensorik als Ergänzung in das System einzubringen. Vorzugsweise mit Wegaufnehmern (z.B. induktiv) an der Gewindespindel wird die genaue Stellung des Federspeichers und somit die Größe der Bremskraft ermittelt. Zum Zweck der Überwachung auch während der Fahrt wird die Spindelposition ermittelt. Mit der reinen Spannungs- resp. Stromüberwachung ist es beispielsweise nicht möglich, ein sehr langsames Schließen der Bremse unterwegs zu erkennen, da im Prinzip keine Stromerzeugung durch den Elektromotor erfolgt, wie auch bei korrekter Funktion erwartet. Außerdem wirkt diese Sensorik als Unterstützung und Ergänzung der Spannungs- resp. Stromüberwachung.

Unter deren Zuhilfenahme ist es sogar möglich, die Federspeicherbremse als Hilfs- - oder Betriebsbremse einzusetzen. Dadurch, daß die Kraft an der Bremse durch die Spindellage bestimmt ist, wirkt der Wegaufnehmer gleichzeitig als Bremskraftsensor. Somit kann ein vom Fahrer gegebenes Bremssignal entsprechend dem Bremswunsch in eine definierte Bremskraft am Rad umgesetzt werden.

Anstelle eines Wegaufnehmers ist auch die Verwendung einer anderen Art von Stellungsgeber möglich, beispielsweise ein Drehgeber an der Spindelmutter oder am Wälzlager oder ein Winkelaufnehmer. Hiermit kann durch entsprechende Umrechnung auch auf den Verfahrweg der Spindel und somit auf die Bremskraft geschlossen werden.

Nach einer weiteren Variante der Erfindung umfaßt die Zuspannvorrichtung der Scheibenbremse eine Haltevorrichtung, die eine mechanisch und/oder elektromagnetisch lösbare Bremse aufweist, welche die Kraft zum Halten der Feder erzeugt (insbesondere mechanisch). Dazu eignet sich eine beispielsweise eine an sich bekannte Scheiben-Federdruckbremse. Im Gegensatz zum gattungsgemäßen Stand der Technik wird die Kraft zum Halten des Federspeichers mechanisch aufgebracht. Daraus resultiert der Vorteil minimalen Stromverbrauchs bei verlängerter Lebensdauer.

Weitere vorteilhafte Ausbildungen der Erfindung sind den übrigen Unteransprüchen zu entnehmen.

Nachfolgend wird die Erfindung anhand von Ausführungsbeispielen unter Bezug auf die Zeichnung näher beschrieben. Es zeigt:
Fig. 1 eine schematische, teilgeschnittene Darstellung eines Federspeichers, dessen Funktion mit der Erfindung überwacht werden kann; und
Fig. 2 ein Blockschaltbild von Komponenten der erfindungsgemäßen Überwachungsvorrichtung;
Fig. 3 ein Diagramm, welches eine Soll-Charakteristik des Spannungsverlaufes im Generatorbetrieb des Motors einer Ist-Charakteristik im Fehlerfall gegenüberstellt; und
Fig. 4 ein Diagramm, welches eine Soll-Charakteristik des Spannungsverlaufes im Generatorbetrieb des Motors einer Ist-Charakteristik im Fehlerfall gegenüberstellt.

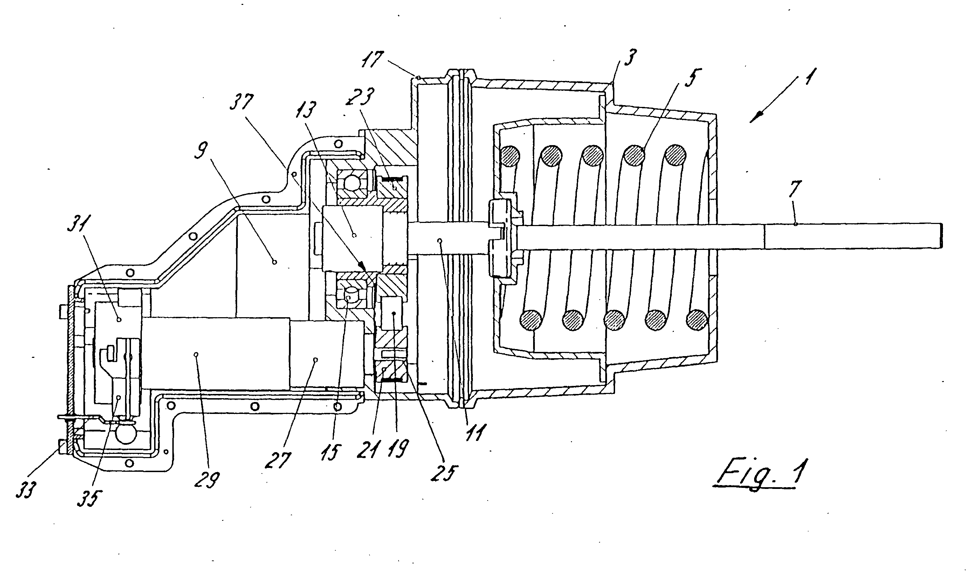

Fig. 1 zeigt einen Federspeicher 1 mit einem ersten Gehäuseabschnitt 3, der eine Feder 5 aufnimmt, die auf eine (hier nicht dargestellte) Bremsanlage über einen Stößel 7 eine Kraft ausübt, um ein Fahrzeug abzubremsen.

Auf dem Federspeicher 1 ist eine elektromechanische Auslöseeinheit 9 angeordnet. Zur Ausübung von Kraft auf den Federspeicher 1 dient ein Linearantrieb, der mit Hilfe eines Kugelgewindetriebes realisiert wird (denkbar sind auch Rollengewindetriebe u.ä.). Dazu überträgt die axial verschiebliche Kugelgewindespindel 11 die Kraft auf den Stößel 7, was zum Spannen der Feder 5 führt. Auf der Kugelgewindespindel 11 sitzt eine Spindelmutter 13, die über eine Lagerung 15 in einem zweiten Gehäuseabschnitt 17 fixiert ist. Ein besonderer Vorteil des Antriebs mit einem Kugelgewindetrieb (oder einem Planetengewindetrieb etc.) liegt in dem damit zu erzielenden günstigen Gesamtwirkungsgrad im Vergleich zu hydraulischen oder pneumatischen Lösungen.

Der Antrieb der Spindelmutter 13 erfolgt über einen Zahnriemen(trieb) 19 (denkbar sind auch Kettentriebe, Stirnradgetriebe u.ä.). Vom Zahnritzel 21 wird über den Zahnriemen 19 das Rad 23 angetrieben, welches auf der Spindelmutter 13 sitzt. Das Ritzel 21 ist wiederum auf der Abtriebswelle 25 eines Planetengetriebes 27 (denkbar auch Stirnradgetriebe, Cyclogetriebe u.ä.) befestigt. Das Getriebe 27 ist ebenfalls im Gehäuse 17 fixiert. Der Antrieb des Gesamtsystems wird über einen Elektromotor 29 realisiert.

Um die Bremse in der Fahrstellung halten zu können, ohne den Motor 29 unter Strom zu halten, ist an der Welle des Motors 29 eine mechanisch und elektromagnetisch lösbare Bremse 31 angebracht. Im stromlosen Zustand wird der Motor 29 über einen Federmechanismus in seiner Lage gehalten, was für die gesamte Einheit eine Fixierung bedeutet. Geströmt man die Magnetbremse 31 oder betätigt man mit dem Seilzug 33 die mechanische Lösevorrichtung 35, so kann die Motorwelle in beiden Richtungen frei drehen und die Bremse gelöst bzw. eingelegt werden.

Der gesamte Mechanismus ist so eingestellt, daß zum Entspannen des Federspeichers 1 die Federkraft der Feder 5 ausreicht, d.h. es ist keine Unterstützung durch den Elektromotor 29 notwendig. Lediglich zum Spannen der Feder 5 ist der Motor 29 erforderlich. Das System ist somit selbsthemmungsfrei.

Der Feder 5 gibt ihre Kraft solange an das Gesamtsystem ab, bis sie entweder durch die Wirkung der Magnetbremse 31 wieder gehalten wird oder mit der Federkraft der Bremse im Gleichgewicht steht (Vollbremsung / Parkstellung). In diesem Fall sind jedoch die Massen des Motors 29 und der nachgeschalteten Getriebe (die Gesamtheit der zusammenwirkenden Getriebe trägt das Bezugszeichen 37) auf ihre maximale Drehzahl beschleunigt. Diese kinetische Energie wird in weitere potentielle (Verformungs-) Energie an der Bremse umgesetzt, d. h. die Bremse spannt weiter zu. Sobald diese kinetische Energie vollständig umgewandelt ist, wirkt die Magnetbremse 31 und arretiert die gesamte Anordnung. Es liegt damit eine Art "dynamischer Nachspanneffekt" vor. Dieser Effekt laßt sich verstärken, wenn der Elektromotor 29 am Umkehrpunkt der beginnenden gedämpften harmonischen Schwingung, d.h. vor Einsetzen der Magnetbremse 31 erneut anläuft und die Bremskraft weiter erhöht. Dieser Mechanismus erlaubt es, die Feder 5 kleiner zu dimensionieren, als es allein für die Haltefunktion notwendig wäre. Dies ist ein weiterer bedeutender Vorteil in Hinsicht auf eine weitere Reduzierung des Bauraumes, des Gewichts und der Kosten.

Durch die Magnetbremse 31 kann die Vorrichtung in jeder beliebigen Stellung gehalten werden. Dies führt dazu, daß die Zuspannvorrichtung nicht nur als Parkbremse wirkt sondern durch eine einfache Steuerung auch als Betätigung für die Betriebs- oder Hilfsbremse wirken kann, da die Bremskraft bis zur maximalen Federkraft in beliebiger Höhe aufgebracht werden kann.

Ein Charakteristikum.des elektromechanischen Federspeicherzylinders aus Fig. 1 besteht darin, daß beim Einlegen der Feststellbremse, d.h. bei einem Entspannen der Feder 5, am Elektromotor 29 eine Generatorwirkung entsteht, da die Feder 5 über den Spindeltrieb 11, das Umschlingungsgetriebe 19 und das Planetengetriebe 27 den Motor 29 antreibt, so daß dieser Strom erzeugt. Diesen Effekt nutzt die Erfindung zur Realisierung einer Überwachungsvorrichtung und eines Überwachungsverfahrens.

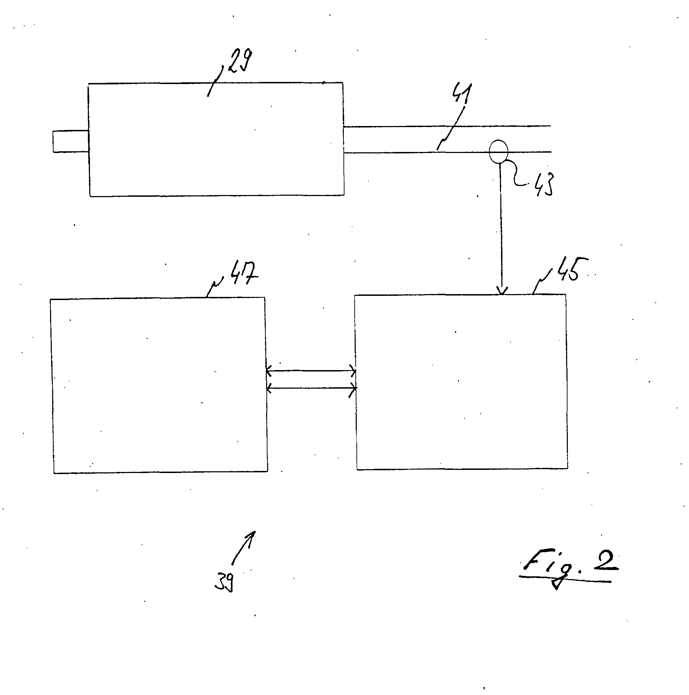

Die Überwachungsvorrichtung 39 weist nach eine Fig. 2 einen Sensor 43 auf, welcher in Fig. 2 lediglich schematisch angedeutet ist und mit dem der Spannungs- und/oder Stromverlauf in der /den Zuleitung(en) 41 zum Elektromotor 29 sensierbar ist. Der Ausgang des Sensors 43 ist an eine Auswertungseinrichtung 45 angeschlossen, welche dazu ausgelegt ist, den mit dem Sensor 43 ermittelten Strom- und/oder Spannungsverlauf mit vorgespeicherten Sollwerten (Speicher 47) und/oder einer vorgespeicherten Sollwertcharakteristik zu vergleichen. Für derartige Funktionen eignen sich entsprechende integrierte Schaltkreise, die im Handel erhältlich sind.

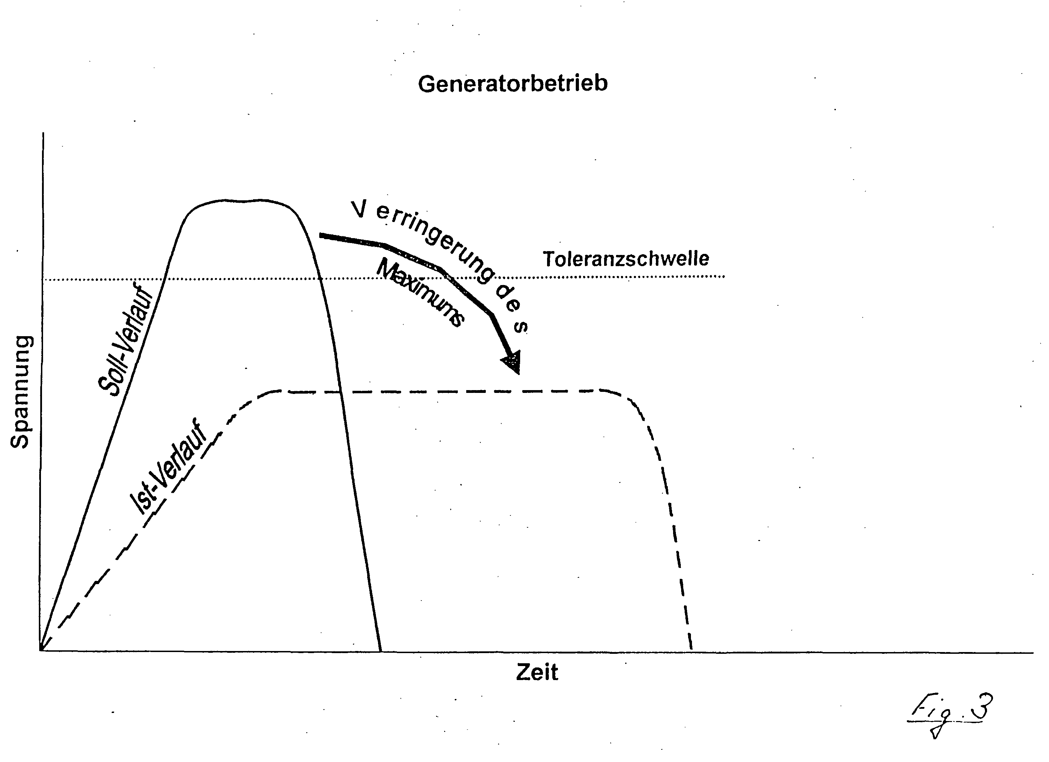

Fig. 3 zeigt einen Vergleich des Sollverlaufs der Generatorspannung beim Einlegen der Parkbremse mit einem Verlauf, wie er beispielsweise bei Schwergängigkeit z. B. der Gewindespindel auftreten kann. In diesem Fall ist das Maximum der Spannung geringer, da die Motordrehzahl geringer ist. Zum Zweck der Überwachung wird im Generatorbetrieb des Federspeichers eine Toleranzschwelle für die zulässige Minimalspannung resp. -strom festgelegt und bei einem Unterschreiten dieser Schwelle bei Stromerzeugung ein Warnsignal abgegeben. Das Warnsignal kann im Einschalten einer Bremskontrolleuchte bestehen und/oder bei Fahrzeugen, die über ein Fahrerinformations- oder Serviceinformationssystem verfügen, über einen entsprechenden Warnhinweis unter Nutzung dieser Systeme erfolgen, wobei in diesem Fall bereits eine Fehlerindikation möglich ist. Auch vor Einbau des Systems in das Fahrzeug läßt sich mit einfacher Elektronik die Funktionsfähigkeit des elektromechanischen Federspeichers überprüfen. Bei einwandfreier Funktion des Federspeichers 1 und des Lösemechanismus wird diese Generatorspannung resp. -strom den vorgegebenen Mindestbetrag überschreiten. Wird dieser Mindestbetrag nicht erreicht, so ist dies ein Indiz für eine beginnende Störung.

Es gibt im wesentlichen zwei Indikationszustände: Die Magnetbremse 31 wird bestromt oder nicht. Wird die Magnetbremse bestromt, öffnet diese und gibt den Lösemechanismus frei. Durch die Kraft der Feder 5 wird über den Lösemechanismus der Elektromotor 29 angetrieben, so daß er einen Strom abgibt und das eine Spannung anliegt. Überschreitet diese Spannung (bzw. der zugehörige Strom) einen vorgegebenen Sollwert (Toleranzschwelle), so wird die Meldung "System in Ordnung" ausgegeben. Wird die Sollspannung (-strom) nicht erreicht so erfolgt die Ausgabe "System nicht in Ordnung".

Wird die Magnetbremse 31 dagegen nicht bestromt, ist die Bremse in diesem Zustand durch Federdruck geschlossen und blockiert so den Lösemechanismus. In diesem Zustand gibt der Motor keine Spannung ab. Ein Fehlerfall liegt nicht vor. Wird jedoch bei nicht bestromter Magnetbremse 31 Spannung am Motor 29 festgestellt, so gibt die Elektronik die Meldung "System nicht in Ordnung" aus. Dies ist dann der Fall, wenn die Federdruckbremse den Lösemechanismus nicht gegen die Kraft der antreibenden Feder 5 im Stillstand halten kann und durchrutscht. Der Federspeicher 1 beginnt einzubremsen.

Ebenso können die Folgen einer auftretenden Störung durch entsprechende Ansteuerung des elektrischen Antriebs vermieden werden. Dies wird anhand des Fehlers der rutschenden Magnetbremse 31 näher erläutert.

Der Federspeicher 1 fährt in dieser Situation gegen die schleifende 31 Haltebremse ein. Ohne Kontrollmaßnahme wäre ein Einbremsen der betroffenen Fahrzeugbremse mit damit verbundenem plötzlichen Schiefziehen des Fahrzeugs z. B. bei voller Fahrt die Folge. Am Motor 29 liegt hierbei eine Generatorspannung an, obwohl die Spannung bei gelöster Bremse Null sein sollte. Sobald dieser Fehler erkannt wird, wird der Motor 29 sofort, noch bevor das Einbremsen wirksam wird, mit einer Spannung beaufschlagt und die Bremse in Fahrstellung gehalten. Gleichzeitig wird die Warnanzeige und/oder das Fahrer-/Serviceinformationssystem zur Fehleranzeige geschaltet.

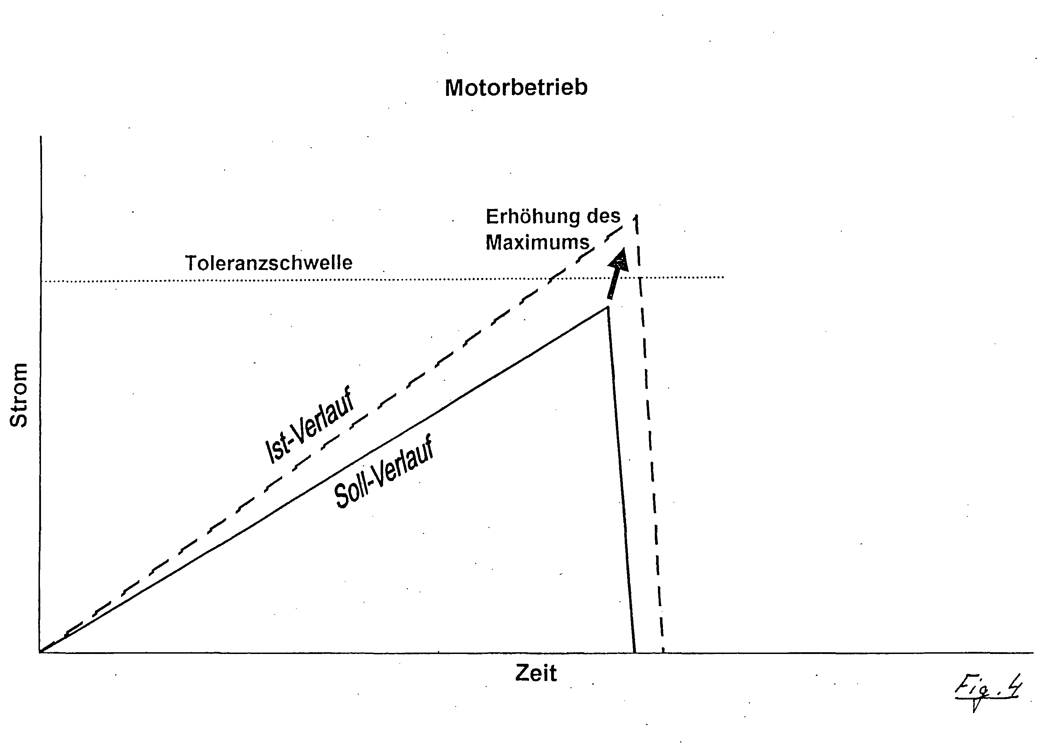

Analog ist es möglich, den Strom zu erfassen und mit einem Sollwert zu vergleichen. Wird der Federspeicher 1 im Fehlerfall (z. B. Schwergängigkeit) gespannt, so ergibt sich ein Stromverlauf, wie er in Fig. 4 dargestellt ist. Aufgrund der Schwergängigkeit erhöht sich die Leistungsaufnahme des Motors 29, um die Feder 5 spannen zu können. Die zeigt sich in der erhöhten Stromaufnahme. Überschreitet das Maximum des Stroms die Toleranzschwelle, wird eine Fehlermeldung ausgegeben.

### Bezugszeichen

- Federspeicher: 1
- Gehäuseabschnitt: 3
- Feder: 5
- Stößel: 7
- Auslöseeinheit: 9
- Kugelgewindespindel: 11
- Spindelmutter: 13
- Lagerung: 15
- Gehäuseabschnitt: 17
- Zahnriemen: 19
- Zahnritzel: 21
- Rad: 23
- Abtriebswelle: 25
- Planetengetriebe: 27
- Elektromotor: 29
- Magnetbremse: 31
- Seilzug: 33
- Lösevorrichtung: 35
- Getriebe: 37
- Überwachungsvorrichtung: 39
- Zuleitung: 41
- Sensor: 43
- Auswertungseinrichtung: 45
- Speicher: 47

## Patentansprüche

1. Vorrichtung zur Überwachung elektromechanischer Zuspannvorrichtungen für Fahrzeugbremsen,
a) wobei die elektromechanische Zuspannvorrichtung folgendes aufweist:
- einen Antrieb, der einen Elektromotor (29) mit einer Stromzuführung umfaßt,
- vorzugsweise einen Federspeicherzylinder (1) mit einer von dem Antrieb spannbaren Feder (5) zur Betätigung eines Stößels (7) zum Zuspannen und Lösen der Fahrzeugbremse;
**dadurch gekennzeichnet, daß**
b) die Überwachungsvorrichtung (39) eine Ermittlungseinrichtung (43) zur Ermittlung des Strom- und/oder Spannungsverlaufes in der Stromzuführung (41) aufweist, deren Ausgang an eine Auswertungseinrichtung (45) angeschlossen ist, welche dazu ausgelegt ist, den ermittelten Strom- und/oder Spannungsverlauf mit vorgespeicherten Sollwerten und/oder einer vorgespeicherten Sollwertcharakteristik zu vergleichen,
c) die Ermittlungseinrichtung einen der Stromzuführung zugeordneten Sensor (43) zur Sensierung des in der Zuleitung (41) zum Elektromotor (29) anliegenden Strom- oder Spannungsverlaufes aufweist.

2. Überwachungsvorrichtung nach einem der vorstehenden Ansprüche, **dadurch gekennzeichnet, daß** die Auswertungseinrichtung (45) dazu ausgelegt ist, den ermittelten Strom- und/oder Spannungsverlauf mit der vorgespeicherten Sollwertcharakteristik im Generatorbetrieb des Elektromotors (29) zu vergleichen.

3. Überwachungsvorrichtung nach einem der vorstehenden Ansprüche, **dadurch gekennzeichnet, daß** die Auswertungseinrichtung (45) dazu ausgelegt ist, den ermittelten Strom- und/oder Spannungsverlauf mit der vorgespeicherten Sollwertcharakteristik im Motorbetrieb des Elektromotors (29) zu vergleichen.

4. Überwachungsvorrichtung nach einem der vorstehenden Ansprüche, **dadurch gekennzeichnet, daß** die Auswertungseinrichtung (45) dazu ausgelegt ist, im Falle einer grenzwertüberschreitenden Abweichung von der Sollwertcharakteristik eine Fehlermeldung auszugeben.

5. Überwachungsvorrichtung nach einem der vorstehenden Ansprüche, **dadurch gekennzeichnet, daß** die Auswertungseinrichtung (45) dazu ausgelegt ist, im Falle einer grenzwertüberschreitenden Abweichung von der Sollwertcharakteristik eine Fehlerkorrektur zu initiieren.

6. Überwachungsvorrichtung nach einem der vorstehenden Ansprüche, **dadurch gekennzeichnet, daß** die Zuspannvorrichtung ein dem Elektromotor (29) zugeordnetes Getriebe (27, 37) mit einer Spindeleinrichtung (11, 13) zum Spannen der Feder (5) aufweist.

7. Überwachungsvorrichtung nach einem der vorstehenden Ansprüche, **gekennzeichnet durch** einen Stellungsgeber an der Gewindespindel (11).

8. Überwachungsvorrichtung nach einem der vorstehenden Ansprüche, **dadurch gekennzeichnet, daß** der Stellungsgeber als Wegaufnehmer ausgebildet ist.

9. Überwachungsvorrichtung nach einem der vorstehenden Ansprüche, **dadurch gekennzeichnet, daß** der Stellungsgeber als Drehgeber ausgebildet ist.

10. Überwachungsvorrichtung nach einem der vorstehenden Ansprüche, **dadurch gekennzeichnet, daß** die Zuspannvorrichtung der Scheibenbremse eine Haltevorrichtung aufweist, die eine mechanisch und/oder elektromagnetisch lösbare Bremse umfaßt.

11. Verfahren zur Überwachung elektromechanischer Zuspannvorrichtungen für Fahrzeugbremsen mit einer Überwachungsvorrichtung nach einem der vorstehenden Ansprüche, **dadurch gekennzeichnet, daß** mit der Ermittlungseinrichtung der Strom- und Spannungsverlauf in der Stromzuführung im Generatorbetrieb und/oder im Motorbetrieb des Elektromotors überwacht und mit Hilfe der Auswertungseinrichtung mit vorgespeicherten Sollwerten oder mit einer vorgespeicherten Sollwertcharakteristik verglichen wird, wobei bei einem Auftreten von Abweichungen von den vorgespeicherten Sollwerten oder der vorgespeicherten Sollwertcharakteristik ein Fehlersignal erzeugt wird.

## Claims

1. A device for monitoring electromechanical brake application devices for vehicle brakes,
a) the electromechanical brake application device having the following:
- a drive unit which comprises an electric motor (29) with a power supply,
- preferably a spring brake cylinder (1) with a spring (5) which can be loaded by the drive unit in order to actuate a tappet (7) for applying and releasing the vehicle brake,
**characterised in that**
b) the monitoring device (39) has a detection device (43) for detecting the current and/or voltage curve in the power supply (41) which has an output which is connected to an evaluation device (45) which is designed to compare the current and/or voltage curve detected with pre-stored reference values and/or a pre-stored reference value characteristic,
c) the detection device has a sensor (43) associated with the power supply for sensing the current or voltage curve in the supply line (41) to the electric motor (29).

2. A monitoring device in accordance with one of the preceding claims,
**characterised in that**
the evaluation device (45) is designed to compare the current and/or voltage curve detected with the pre-stored reference value characteristic when the electric motor (29) is in generator mode.

3. A monitoring device in accordance with one of the preceding claims,
**characterised in that**
the evaluation device (45) is designed to compare the current and/or voltage curve detected with the pre-stored reference value characteristic when the electric motor (29) is in motor mode.

4. A monitoring device in accordance with one of the preceding claims,
**characterised in that**
the evaluation device (45) is designed to emit an error message in the event of a deviation from the reference value characteristic which exceeds a threshold value.

5. A monitoring device in accordance with one of the preceding claims,
**characterised in that**
the evaluation device (45) is designed to initiate an error correction process in the event of a deviation from the reference value characteristic which exceeds a threshold value.

6. A monitoring device in accordance with one of the preceding claims,
**characterised in that**
the brake application device has a gear mechanism (27, 37) associated with the electric motor (29) with a spindle device (11, 13) for loading the spring (5).

7. A monitoring device in accordance with one of the preceding claims,
**characterised by**
a position indicator on the threaded spindle.

8. A monitoring device in accordance with one of the preceding claims,
**characterised in that**
the position indicator is designed as a distance sensor.

9. A monitoring device in accordance with one of the preceding claims,
**characterised in that**
the position indicator is designed as a shaft encoder.

10. A monitoring device in accordance with one of the preceding claims,
**characterised in that**
the brake application device of the disc brake has a retaining device which comprises a mechanically and/or electro-magnetically releasable brake.

11. A process for monitoring electro-mechanical brake application devices for vehicle brakes having a monitoring device in accordance with one of the preceding claims,
**characterised in that**
the current and voltage curves in the power supply are monitored by the detection device when the electric motor is in generator mode and/or in motor mode and compared with pre-stored reference values or with a pre-stored reference value characteristic using the evaluation device, an error signal being generated in the event of deviations from the pre-stored reference values or the pre-stored reference value characteristic.

## Revendications

1. Dispositif de surveillance pour un dispositif électromécanique de serrage de frein, destiné aux freins de véhicules, dans lequel
(a) ledit dispositif électromécanique de serrage comprend les éléments suivants :
- un mécanisme d'entraînement comprenant un moteur électrique (29) à un système d'alimentation en courant,
- de préférence un cylindre accumulateur à ressort (1), renfermant un ressort (5) apte à être mis en contrainte par ledit mécanisme d'entraînement afin de commander un poussoir (7) pour le serrage et desserrage du frein de véhicule ;
**caractérisé en ce que**
(b) le dispositif de surveillance (39) comprend un moyen détecteur (43) à détecter la courbe de tension dans le système d'alimentation en courant (41), dont la sortie est raccordée à un moyen analyseur (45) conçu d'une telle manière qu'il compare la courbe détectée du courant et/ou de la tension avec des valeurs de consigne mises en mémoire au préalable et/ou avec une caractéristique de consigne mise en mémoire au préalable,
(c) **en ce que** ledit moyen détecteur comprend un détecteur (43) affecté audit système d'alimentation en courant afin de détecter la courbe du courant ou de la tension appliqué dans le câble d'alimentation menant audit moteur électrique (29).

2. Dispositif de surveillance selon une quelconque des revendications précédentes, **caractérisé en ce que** ledit moyen analyseur (45) est conçu pour la comparaison de la courbe détectée du courant et/ou de la tension avec la caractéristique de consigne mise en mémoire au préalable, en opération dudit moteur électrique (29) en tant que générateur.

3. Dispositif de surveillance selon une quelconque des revendications précédentes, **caractérisé en ce que** ledit moyen analyseur (45) est conçu pour la comparaison de la courbe détectée du courant et/ou de la tension avec la caractéristique de consigne mise en mémoire au préalable, en opération dudit moteur électrique (29) en tant que moteur.

4. Dispositif de surveillance selon une quelconque des revendications précédentes, **caractérisé en ce que** ledit moyen analyseur (45) est conçu pour la sortie d'un message d'erreur au cas d'une déviation de la caractéristique de consigne, qui dépasse une valeur limite.

5. Dispositif de surveillance selon une ou plusieurs des revendications précédentes, **caractérisé en ce que** ledit moyen analyseur (45) est conçu pour l'initialisation d'une correction d'erreur au cas d'une déviation de la caractéristique de consigne, qui dépasse une valeur limite

6. Dispositif de surveillance selon la revendication 5, **caractérisé en ce que** le dispositif de serrage comprend un engrenage (27, 37) à un moyen à broche (11, 13), qui est affecté audit moteur électrique (29) et qui sert à mettre ledit ressort (5) en contrainte.

7. Dispositif de surveillance selon une quelconque des revendications précédentes, **caractérisé par** un capteur de position à ladite broche filetée (11).

8. Dispositif de surveillance selon une quelconque des revendications précédentes, **caractérisé en ce que** ledit capteur de position est configuré sous forme d'un capteur de déplacement.

9. Dispositif de surveillance selon une ou une quelconque des revendications précédentes, **caractérisé en ce que** ledit capteur de position est configuré sous forme d'un capteur de rotation.

10. Dispositif de surveillance selon une quelconque des revendications précédentes, **caractérisé en ce que** ledit dispositif de serrage du frein à disque comprend un dispositif de retenu qui renferme un frein à desserrage mécanique et/ou électromagnétique.

11. Procédé à surveiller un dispositif électromécanique de serrage de frein, destiné aux f reins de véhicules, à un dispositif de surveillance selon une quelconque des revendications précédentes, **caractérisé en ce que** la courbe de courant et de tension dans le système d'alimentation en courant est surveillée moyennant ledit moyen détecteur en opération en tant que générateur et/ou en opération en tant que moteur dudit moteur électrique, en étant comparée, moyennant ledit moyen analyseur, avec des valeurs de consigne mises en mémoire au préalable ou avec une caractéristique de consigne, mise en mémoire au préalable, à un signal d'erreur étant engendré au cas des déviations des valeurs de consigne mises en mémoire au préalable ou de la caractéristique de consigne mise en mémoire au préalable.
